# FASCICULE DE BREVET EUROPEEN

(11) **EP 0 616 982 B1**
(45) Date de publication et mention de la délivrance du brevet: **09.09.1998**
(21) Numéro de dépôt: 94400555.2
(22) Date de dépôt: 15.03.1994
(51) Int. Cl.: C03B 5/20, C03B 5/26, C03B 5/03

(54) **Procédé et dispositif pour la fusion du verre**
Verfahren und Vorrichtung zum Schmelzen von Glas
Method and apparatus for melting glass

(30) Priorité: 23.03.1993 FR 9303288
(43) Date de publication de la demande: 28.09.1994
(73) Titulaire: SAINT-GOBAIN VITRAGE, 92400 Courbevoie (FR)
(72) Inventeur: Coto Muniz, Jose Antonio, E-20030 Madrid (ES); Grijalba Goicoechea, Luis, E-33400 Aviles (ES); Lemaille, Maurice, F-59500 Douai (FR)
(74) Mandataire: Muller, René

(56) Documents cités:
- EP-A- 0 304 371
- FR-A- 1 300 588
- US-A- 2 508 222
- US-A- 2 677 003

## Description

La présente invention concerne la fusion de matières vitrifiables et notamment un procédé et un four à fusion électrique pour la fusion du verre obtenue par la chaleur dégagée par effet Joule.

Parmi les différents types connus de fours électriques pour la fusion du verre, les fours à fusion dite à voûte froide ou four à cubilot sont des fours dans lesquels la composition solide de matières vitrifiables, apportée par le dessus, forme une couche supérieure qui recouvre complètement le bain de verre en fusion, le verre élaboré étant extrait à la partie basse du four par une gorge pour passer dans la cellule suivante qui peut être une cellule d'affinage, puis au conditionnement.

Un des problèmes rencontrés dans ce type de four notamment lorsqu'il fonctionne avec des températures de verre élevées, de l'ordre de 1500°C, est l'usure rapide des réfractaires délimitant la gorge et en particulier des réfractaires délimitant la partie supérieure de la gorge.

En effet, malgré l'utilisation de systèmes de refroidissement permettant de limiter l'attaque des réfractaires par le verre à haute température, ces réfractaires doivent généralement être remplacés plus rapidement que les autres éléments en réfractaire du four. Un tel remplacement nécessite l'arrêt du four ou tout au moins quand cela est possible une réparation à chaud impliquant l'arrêt de la production.

En outre, les pièces en réfractaire constituant la voûte de la gorge présentent généralement des dimensions maximales limitées de sorte que la section de la gorge est elle-même limitée en dimensions. Il s'ensuit pour le four qui utilise une telle gorge en tant qu'ouverture de sortie pour l'extraction du verre élaboré, une capacité de tirée limitée ne dépassant généralement pas 200 tonnes/jour.

Il est connu du document FR-A-1 300 588 un barrage pour fours à bassin de verrerie dont la partie immergée dans le bain de verre est faite en un alliage résistant aux conditions chimiques et physiques régnant dans ledit four de manière à éviter l'emploi d'un système de refroidissement nuisible au verre présent dans ledit bain.

Il est également connu selon l'enseignement du document EP-A-0 304 371, qu'il peut être prévu, dans un dispositif d'élaboration de verrre continue, une paroi mobile verticalement pour contenir la couche surnageante de matières vitrifiables déposées sur le bain de verre.

L'invention obvie au premier inconvénient cité. Elle propose un four pour la fusion électrique de matières vitrifiables à voûte froide, la composition formant une couche supérieure surnageante, comprenant un compartiment pour la fusion équipé d'électrodes, une sole sensiblement horizontale et une sortie en forme de gorge immergée pour l'extraction du verre élaboré et son passage dans le compartiment aval, dans lequel la gorge est délimitée au moins en partie haute par un barrage mobile présentant une partie supérieure s'étendant vers le haut jusqu'à un niveau supérieur à celui de la composition surnageante recouvrant le verre en fusion et une partie inférieure destinée à être totalement immergée dans le verre en fusion et présentant des faces en un métal ou un alliage de métaux résistant à la corrosion par le verre en fusion.

Par mobile, on entend selon l'invention la faculté qu'a le barrage à pouvoir être retiré du four sans pour autant arrêter la marche de celui-ci. La mobilité est avantageusement une mobilité verticale qui notamment est plus facile à mettre en oeuvre qu'une mobilité latérale. Selon une forme préférée de l'inveniton, le barrage mobile est réglable en hauteur, ainsi obviant au deuxième inconvénient cité.

Par réglable en hauteur, on entend selon l'invention la faculté qu'à un même barrage à pouvoir être disposé à un niveau variable par rapport au niveau de la face inférieure de la gorge et par là la possibilité de faire varier la section de sortie du four.

Le métal résistant à la corrosion par le verre en fusion et constituant la partie inférieure du barrage, au moins ses faces, et avantageusement toute la partie inférieure du barrage dans son épaisseur, est choisi notamment parmi le molybdène, le tungstène, le platine rhodié ou un métal équivalent vis-à-vis de la résistance mécanique et vis-à-vis de la corrosion par le verre en fusion. On choisit de préférence des éléments en molybdène, notamment pour des raisons de coût.

L'extrémité de sortie qui selon l'invention utilise un barrage mobile et avantageusement réglable, non seulement permet d'augmenter la longévité du four, mais en outre elle permet une adaptabilité remarquable du four à une modification de tirée et/ou à une modification de la composition verrière.

Par le choix du matériau constituant au moins les faces de la partie inférieure du barrage, ce dernier présente une durée de vie élevée et permet durant tout ce temps un bon fonctionnement du four sans interruption. Par sa mobilité, il est possible de le retirer et de le remplacer par un barrage équivalent, en quelques heures et donc de limiter la perte de verre due à ce remplacement.

Cette perte de verre peut même être totalement évitée en prévoyant deux positions de barrage successives et voisines l'une de l'autre. Avec une telle réalisation, un second barrage identique au premier peut être mis en place avant le retrait du premier.

Selon une forme de réalisation de la partie inférieure du barrage, celle-ci est constituée d'au moins une plaque métallique revêtue par une couche d'épaisseur suffisante de molybdène et de préférence d'au moins une plaque entièrement en molybdène.

Pour satisfaire au problème de dilatation de ce matériau à haute température, il est avantageux de former la partie inférieure à l'aide de deux plaques en molybdène se recouvrant latéralement au centre du barrage pour résister à l'écoulement du verre et avec un jeu suffisant pour pouvoir absorber la dilatation du métal.

La ou les plaques métalliques peuvent avoir une épaisseur comprise entre 5 et 50 millimètres environ. Cette épaisseur devant être suffisante pour éviter une trop grande déformation du barrage.

Pour encore mieux éviter cette déformation et pour d'une manière plus générale renforcer la structure de la partie inférieure du barrage lorsque celle-ci est formée d'au moins une plaque métallique, il peut être avantageux de concevoir le barrage avec des extrémités latérales c'est-à-dire des cotés de plus forte épaisseur. Ainsi, la partie inférieure peut être pourvue sur ses deux cotés de cylindres de diamètres supérieurs à l'épaisseur de la ou des plaques, dans lesquels sont partiellement encastrés, et avec un jeu suffisant pour permettre les dilatations, le ou les cotés des plaques métalliques.

Ces cylindres constituant les extrémités latérales de la partie inférieure du barrage peuvent être au moins dans leur partie supérieure refroidis intérieurement, ce qui a notamment pour avantage d'empêcher le passage du verre entre les cotés latéraux du barrage et les parois latérales de la gorge et aussi de préserver ces parois latérales d'une corrosion rapide.

Dans une variante selon l'invention, la partie inférieure du barrage peut être formée par un assemblage de cylindres verticaux accolés les uns aux autres de diamètre généralement supérieur à 50 mm, en un métal résistant à la corrosion par le verre en fusion, qui avantageusement est du molybdène.

La partie supérieure du barrage solidairement liée à la partie inférieure, a normalement pour fonction de retenir la composition verrière à la surface dans le compartiment de fusion. Elle s'étend sur une hauteur suffisante pour dépasser vers le haut le niveau supérieur de la composition verrière surnageante, et pour dépasser généralement vers le bas le niveau inférieur de cette composition surnageante. Elle est formée selon une réalisation de barrage par au moins un bloc en réfractaire de forme sensiblement parallélépipédique. Ce ou ces blocs en réfractaire peuvent être pourvus de moyens de refroidissement intérieurs.

Cette partie supérieure est encore munie de moyens tels que crochets ou autre moyen de préhension permettant d'assurer la mobilité verticale du barrage et son retrait le cas échéant.

Dans une variante selon l'invention, la partie supérieure du barrage est formée d'éléments de refroidissement, par exemple des tubes de refroidissement en forme de U superposés dont les bases disposées sensiblement horizontalement constituent la zone médiane de la partie supérieure du barrage, celle qui s'étend de part et d'autre du niveau de la composition solide surnageante.

Ces tubes de refroidissement peuvent être en acier réfractaire, en acier inoxydable ou simplement en acier doux, ou en un autre alliage métallique. Ils peuvent être protégés par des plaques métalliques ou en variante par un revêtement qui peut être une peinture vitrifiable ou un émail.

Une forme préférée du barrage selon l'invention associe une partie inférieure constituée d'au moins deux plaques en molybdène se recouvrant partiellement et terminées par deux cylindres d'extrémité formant les deux cotés latéraux du barrage, également en molybdène. Ces deux cylindres sont surmontés par des cylindres de refroidissement qui appartiennent à la partie supérieure du barrage qui encadrent des conduits de refroidissement en forme de U parcourus intérieurement par de l'eau par exemple, constituant les autres éléments de la partie supérieure. Ces cylindres et conduits de refroidissement peuvent être en acier réfractaire ou en acier inoxydable par exemple. Les plaques en molybdène sont tenu par des pièces de support s'appuyant sur des éléments de la partie supérieure du barrage.

Le refroidissement des cylindres formant les cotés latéraux du barrage permet d'assurer l'étanchéité avec les paroi latérales en réfractaire de la gorge et d'éviter ainsi la circulation du verre entre le barrage et ces parois en réfractaire.

Selon une réalisation avantageuse de l'invention, les cylindres constituant les extrémités latérales du barrage comportent deux circuits de refroidissement indépendants l'un de l'autre : un circuit dit circuit intérieur qui s'enfonce jusqu'à proximité de l'extrémité inférieure des cylindres et qui a notamment pour fonction d'assurer la rigidité mécanique de l'ensemble, l'autre circuit dit circuit extérieur, placé essentiellement dans la partie supérieure du barrage et s'arrêtant sensiblement au niveau de la séparation entre la partie supérieure et la partie inférieure dudit barrage, et qui a notamment pour fonction de figer le verre entre le barrage et les parois latérales de la sortie du four.

Le barrage est muni de moyens de préhension permettant sa mobilité, qui avantageusement est une mobilité verticale, son réglage et son retrait le cas échéant.
Lorsque les deux cylindres latéraux se prolongent vers le bas au-delà de la limite inférieure des deux plaques, ils peuvent alors en reposant directement sur la face inférieure de la gorge délimiter naturellement la hauteur de passage du verre sous les plaques.

La partie supérieure du barrage peut encore être protégée de la composition surnageante par un élément en réfractaire désolidaire du barrage, disposé devant cette partie supérieure et plongeant dans la cuve sur une profondeur correspondant à au moins une partie de l'épaisseur de la composition surnageante. Ainsi en cas de retrait du barrage et lorsqu'on ne dispose pas d'un emplacement pour la mise en place d'un second barrage avant le retrait du premier, la composition peut rester partiellement bloquée par l'élément en réfractaire.

La face inférieure de la gorge est avantageusement constituée par un réfractaire qui peut être dans le prolongement de la sole du four ou avantageusement disposé à un niveau supérieur au niveau de la sole.

Lorsque la face inférieure est à un niveau supérieur au niveau de la sole, cette disposition permet d'utiliser un barrage de moindre hauteur et plus économique pour une ouverture de sortie de hauteur donnée.

Le barrage est généralement disposé verticalement et perpendiculairement aux parois latérales de la gorge bien qu'une position inclinée par rapport à ces parois soit possible.

Le barrage ainsi décrit peut être mis en oeuvre par un procédé de fusion électrique de matières vitrifiables dans lequel la composition solide de matières vitrifiables est apportée au-dessus de la masse de verre en fusion où elle forme une couche supérieure qui recouvre complètement le verre en fusion et dans lequel le verre élaboré est extrait par une gorge ou ouverture à section réduite en largeur et en hauteur, cette ouverture étant ainsi de hauteur réglable selon la tirée et ou le type de composition verrière.

L'ouverture de sortie du verre élaboré pourrait être disposée sensiblement à mi-hauteur de la hauteur de la masse de verre en fusion.

Un autre avantage du barrage selon l'invention lié à sa mobilité et son remplacement éventuel aisé est qu'il permet un fonctionnement du four le cas échéant à des températures de fusion plus élevées que les températures habituellement utilisées pour une même composition de verre dans un four équipé de manière classique d'une gorge de sortie en réfractaires. Par une fusion à haute température, par exemple à 1550°C environ, pour un verre silico-sodo-calcique, il est possible de supprimer toute opération d'affinage ultérieur et de passer directement du compartiment de fusion au canal pour le transfert du verre élaboré au poste de formage.

D'autres caractéristiques et avantages de l'invention apparaissent dans la description suivante d'exemples de réalisation selon l'invention faite en référence aux figures.
**La figure 1** est une vue en section et en élévation du four selon l'invention,
**La figure 2** est une vue en plan du four selon la figure 1,
**La figure 3** est une vue de face en élévation d'une réalisation de barrage selon l'invention,
**La figure 4** est une vue de côté du barrage selon la figure 3,
**La figure 5** est une vue de face en élévation d'une variante du barrage selon l'invention,
**La figure 6** est une vue de côté du barrage selon la figure 5.

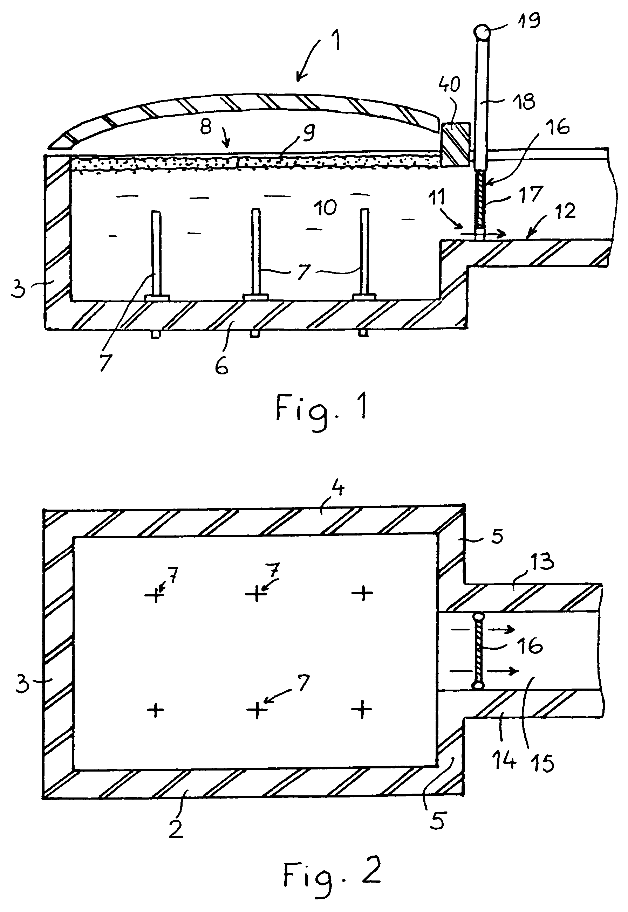

Les figures 1 et 2 représentent schématiquement une réalisation d'un four à cubilot ou à voûte froide selon l'invention. Ce four comprend une cuve de fusion 1 délimitée par des parois en réfractaire 2, 3, 4, 5 et une sole 6 en réfractaire traversée par des électrodes verticales 7 implantées selon deux rangés de 3 électrodes. Ces électrodes sont raccordées à une alimentation électrique, non représentée, de manière à assurer une dissipation d'énergie sensiblement uniforme d'une électrode à l'autre. La température du bain de verre fondu peut ainsi se régler à une valeur pratiquement identique d'une région à l'autre. La composition de matières vitrifiables 8 est apportée sur le dessus du four par un distributeur non représenté et elle forme une couche surnageante 9 au dessus du verre en fusion. Le verre en fusion élaboré 10 est extrait de la cuve 1 par une gorge immergée 11 délimitée en partie basse par un seuil 12 disposé à un niveau supérieur à celui de la sole, latéralement par deux parois verticales 13, 14 appartenant aussi à un compartiment aval 15, et en partie haute par un barrage 16 pouvant être réglable en hauteur et mobile. L'extraction du verre élaboré s' effectue suivant les flèches représentées sur les figures. Ce barrage 16 décrit plus en détail par la suite comprend une partie inférieure 17 destinée à être totalement immergée dans le verre en fusion et une partie supérieure 18 destinée notamment à arrêter la couche surnageante de la composition de matières vitrifiables, en association le cas échéant avec un élément en réfractaire 40 disposé juste avant. La partie supérieure est pourvue de moyens 19 permettant de la relier à un système assurant la mobilité verticale et l'extraction du barrage.

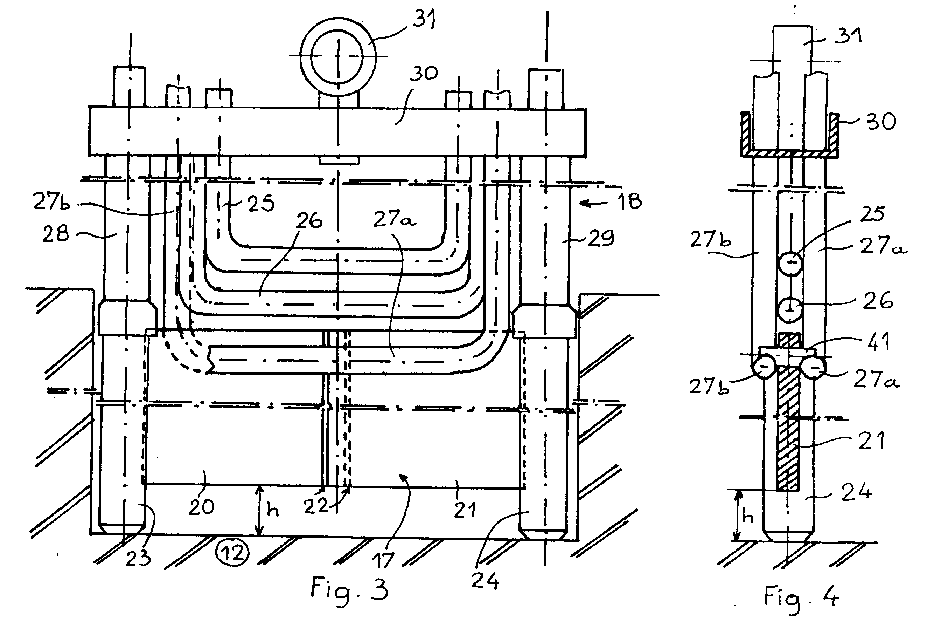

Les figures 3 et 4 représentent une réalisation d'un barrage selon l'invention. Ce barrage représenté en position normale de fonctionnement en association avec les autres éléments de la gorge comprend une partie inférieure 17 constituée de deux plaques 20, 21 en métal résistant à la corrosion par le verre en fusion, notamment du molybdène, qui se recouvrent partiellement latéralement au centre du barrage avec un jeu 22 permettant les dilatations et qui sont maintenues par des pièces de support 41 (non représentées sur la figure 3) s'appuyant sur des éléments de la partie supérieure du barrage ici sur deux conduits de refroidissement 27a, 27b, décrits ci-après et traversant les plaques 20, 21. Ces plaques sont encore partiellement encastrées avec un jeu permettant les dilatations dans deux cylindres 23, 24 formant les deux cotés latéraux du barrage. Ces deux cylindres 23, 24, en un métal résistant à la corrosion par le verre en fusion, notamment en molybdène, sont surmontés d'éléments cylindriques 28, 29 constituant les côtés latéraux de la partie supérieure du barrage. Les cylindres latéraux sont pourvus de deux circuits de refroidissement non représentés : un circuit externe s'étendant essentiellement dans la partie supérieure et qui a notamment pour fonction de diminuer la corrosion des parois latérales 13, 14 en réfractaire de la gorge et de figer le verre entre ces parois et le barrage, et un circuit interne s'enfonçant sur essentiellement toute la hauteur du barrage et qui a notamment pour fonction d'assurer la rigidité mécanique de l'ensemble.

Ces deux cylindres latéraux 23, 24 s'étendent vers le bas au delà du niveau inférieur des deux plaques 20, 21 et peuvent reposer sur la face inférieure 12 de la gorge et délimiter ainsi la hauteur h de passage du verre sous les plaques et la largeur de ce passage. Cette hauteur h peut être par exemple de 40 mm à 200 mm, selon la largeur de passage et la tirée du four.

La partie supérieure 18 du barrage est formée de conduits 25, 26, 27a, 27b de refroidissement en forme générale de U disposés les uns au-dessus des autres et dont les bases horizontales forment la partie médiane de la partie supérieure du barrage. Ces conduits sont disposés entre les éléments cylindriques 28, 29 constituant la partie supérieure latérale du barrage et surmontant les deux cylindres latéraux en molybdène constituant la partie inférieure latérale du barrage.

Les conduits inférieurs 27a, 27b recouvrent la partie la plus haute des plaques de molybdène sur les deux faces. Ils peuvent alors servir d'appui aux pièces de support 41 des plaques en molybdène.

Les extrémités supérieures des cylindres latéraux et des conduits de refroidissement sont reliés par une traverse 30, munie d'un système d'accrochage 31 permettant la levée du barrage ou son maintien en position de travail lorsque les cylindres 23, 24 ne reposent plus sur la face inférieure 12 de la gorge.

La partie inférieure du barrage notamment lorsqu'elle est formée de deux plaques de molybdène présente une très bonne résistance à la corrosion par le verre en fusion. La partie supérieure par ses conduits de refroidissement qui figent la composition surnageante et le verre présente également une très bonne résistance. De sorte que le barrage décrit précédemment peut être utilisé en continu pendant plusieurs mois et avec des ouvertures de passage pour le verre variables en hauteur h.

Après plusieurs mois de fonctionnement et avant que la corrosion ne soit trop importante, le barrage peut être facilement extrait du four et remplacé par un barrage équivalent. Pour faciliter l'extraction, on arrête au préalable le refroidissement dans le circuit de refroidissement externe des cylindres latéraux, destiné à figer le verre au moins sur les côtés du barrage. L'opération de remplacement est très rapide et la campagne de production de verre n'est perturbée que durant un laps de temps limité à quelques heures. En variante, on peut prévoir une deuxième position de barrage à proximité de la première.

Dans ce cas, un second barrage peut être mis en place avant l'extraction du premier. La production du verre n'est alors généralement plus perturbée ou alors la perturbation ne dure qu'un temps très limité.

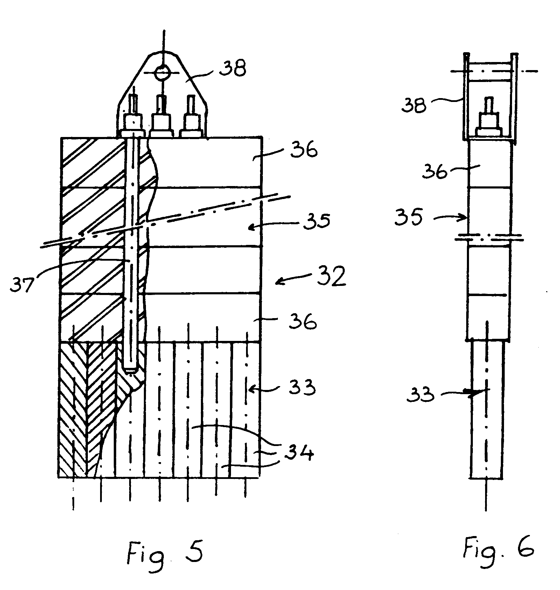

Les figures 5 et 6 représentent une variante d'un barrage 32 selon l'invention. Dans cette variante, la partie inférieure 33 du barrage est constituée de cylindres verticaux 34 en métal résistant à la corrosion par le verre fondu, notamment en molybdène assemblés les uns aux autres, par exemple 7 cylindres, et une partie supérieure 35 constituée de blocs réfractaires 36 formant un ensemble parallélépipédique. Les blocs sont percés verticalement pour le passage de conduits de refroidissement 37. La partie supérieure 35 est munie de moyens 38 permettant la préhension du barrage, sa mobilité et son réglage au niveau désiré selon l'ouverture d'extraction.

Les quelques exemples de barrage selon l'invention décrits ci-dessus n'ont aucun caractère limitatif. D'autres variantes de barrages mobiles, présentant une partie supérieure et une partie inférieure, chacune d'elles ayant les fonctions énoncées précédemment à remplir, entrent dans le cadre de l'invention.

## Revendications

1. Four pour la fusion électrique de matières vitrifiables à voûte froide, la composition (8) formant une couche supérieure surnageante (9), comprenant un compartiment pour la fusion (1), une sole (6) sensiblement horizontale et une sortie en forme de gorge immergée (11) pour l'extraction du verre élaboré et son passage dans un compartiment aval (15), **caractérisé en ce que** la gorge (11) est délimitée au moins en partie haute par un barrage mobile (16) présentant une partie supérieure (18, 25, 26, 27a, 27b) s'étendant vers le haut jusqu'à un niveau supérieur à celui de la composition surnageante (9) et une partie inférieure (17) destinée à être totalement immergée dans le verre en fusion (10), présentant des faces (20, 21) en un métal ou un alliage de métaux résistant à la corrosion par le verre en fusion.

2. Four selon la revendication 1, **caractérisé en ce que** ledit barrage mobile (16) est réglable en hauteur (h).

3. Four selon une des revendications 1 ou 2, **caractérisé en ce que** la partie inférieure (17) du barrage (16) présente des faces (20, 21) en un métal choisi parmi le molybdène, le tungstène, le platine rhodié ou d'autres alliages de ces métaux.

4. Four selon la revendication 3, **caractérisé en ce que** la partie inférieure du barrage (17) est formée essentiellement d'éléments en molybdène.

5. Four selon la revendication 4, **caractérisé en ce que** la partie inférieure (17) est formée essentiellement d'au moins une plaque en molybdène.

6. Four selon la revendication 5, **caractérisé en ce que** la partie inférieure (17) du barrage est formée essentiellement d'au moins deux plaques (20, 21) de molybdène se recouvrant partiellement latéralement.

7. Four selon une des revendications 1 à 6, **caractérisé en ce que** la partie supérieure (18, 25, 26, 27a, 27b) du barrage est en un matériau réfractaire.

8. Four selon une des revendications 1 à 6, **caractérisé en ce que** la partie supérieure du barrage est formée d'au moins un élément de refroidissement.

9. Four selon la revendication 8, **caractérisé en ce que** la partie supérieure (18, 25, 26, 27a, 27b) du barrage est formée de tubes de refroidissement.

10. Four selon la revendication 9, **caractérisé en ce que** la partie supérieure (18, 25, 26, 27a, 27b) du barrage est formée d'au moins deux tubes de refroidissement (25, 26, 27a, 27b) superposés, parallèles, en forme de U dont les bases horizontales forment la partie médiane supérieure du barrage.

11. Four selon une des revendications 8 à 10, **caractérisé en ce que** les éléments de refroidissement sont en acier.

12. Four selon la revendication 11, **caractérisé en ce que** les éléments de refroidissement sont protégés par des plaques métalliques ou un revêtement choisi parmi une peinture vitrifiable ou un émail.

13. Four selon une des revendications 5 à 12, **caractérisé en ce que** les extrémités latérales du barrage au moins dans sa partie inférieure sont constituées de deux cylindres (23, 24) dans lesquels sont partiellement encastrées la ou les plaques métalliques.

14. Four selon la revendication 13, **caractérisé en ce que** les cylindres (23, 24) constituant les extrémités latérales de la partie inférieure du barrage sont surmontés de cylindres (28, 29) constituant les extrémités latérales de la partie supérieure du barrage.

15. Four selon la revendication 14, **caractérisé en ce que** les cylindres (23, 24, 28, 29) sont refroidis intérieurement au moins dans leur partie supérieure.

16. Four selon une des revendications 14 ou 15, **caractérisé en ce que** les cylindres (23, 24, 28, 29) sont équipés de deux circuits de refroidissement indépendants.

17. Four selon une des revendications 1 à 16, **caractérisé en ce que** la partie inférieure de la gorge (11) est délimitée par un seuil (12) situé à un niveau supérieur à celui de la sole (6) du four.

18. Four selon une des revendications 1 à 17, **caractérisé en ce qu'**il présente deux positions de barrage successives.

## Claims

1. Furnace for the electric melting of vitrifiable materials and having a cold crown, the composition (8) forming an upper, supernatant layer (9), comprising a compartment for melting (1), a substantially horizontal floor (6) and an outlet in the form of an immersed throat (11) for the extraction of the glass produced and its passage into a downstream compartment (15), characterized in that the throat (11) is defined, at least in the upper part, by a mobile barrier (16) having an upper portion (18, 25, 26, 27a, 27b) extending in the upwards direction to a level higher than that of the supernatant composition and a lower portion (17) intended to be totally immersed in the molten glass (10), having faces (20, 21) made from a metal or an alloy of metal resisting corrosion by the molten glass.

2. Furnace according to claim 1, characterized in that the mobile barrier (16) is regulatable in height (h).

3. Furnace according to one of the claims 1 or 2, characterized in that the lower portion (17) of the barrier (16) has faces (20, 21) made from a metal chosen from among molybdenum, tungsten, rhodium-containing platinum or other alloys of these metals.

4. Furnace according to claim 3, characterized in that the lower portion of the barrier (17) is essentially formed by molybdenum elements.

5. Furnace according to claim 4, characterized in that the lower portion (17) is essentially formed by at least one molybdenum plate.

6. Furnace according to claim 5, characterized in that the lower portion (17) of the barrier is essentially formed by at least two molybdenum plates (20, 21), which partly laterally overlap.

7. Furnace according to one of the claims 1 to 6, characterized in that the upper portion (18, 25, 26, 27a, 27b) of the barrier is made from a refractory material.

8. Furnace according to one of the claims 1 to 6, characterized in that the upper portion of the barrier is formed by at least one cooling element.

9. Furnace according to claim 8, characterized in that the upper portion (18, 25, 26, 27a, 27b) of the barrier is formed by cooling tubes.

10. Furnace according to claim 9, characterized in that the upper portion (18, 25, 26, 27a, 27b) of the barrier is formed by at least two superimposed, parallel and U-shaped cooling tubes (25, 26, 27a, 27b), whose horizontal bases form the upper, median portion of the barrier.

11. Furnace according to one of the claims 8 to 10, characterized in that the cooling elements are made from steel.

12. Furnace according to claim 11, characterized in that the cooling elements are protected by metal plates or a covering chosen from among a vitrifiable paint or an enamel.

13. Furnace according to one of the claims 5 to 12, characterized in that the lateral ends of the barrier, at least in the lower portion thereof, are constituted by two cylinders (23, 24), in which are partly fitted the metal plate or plates.

14. Furnace according to claim 13, characterized in that the cylinders (23, 24) constituting the lateral ends of the lower portion of the barrier are surmounted by cylinders (28, 29) constituting the lateral ends of the upper portion of the barrier.

15. Furnace according to claim 14, characterized in that the cylinders (23, 24, 28, 29) are internally cooled, at least in their upper portion.

16. Furnace according to one of the claims 14 or 15, characterized in that the cylinders (23, 24, 28, 29) are equipped with two independent cooling circuits.

17. Furnace according to one of the claims 1 to 16, characterized in that the lower portion of the throat (11) is defined by a submerged bar (12) at a higher level than that of the furnace floor (6).

18. Furnace according to one of the claims 1 to 17, characterized in that it has two successive barrier positions.

## Patentansprüche

1. Elektrischer Schmelzofen mit kalter Decke für glasbildende Stoffe, wobei eine Zusammensetzung (8) eine aufschwimmende obere Schicht (9) bildet, welcher ein Abteil (1) für den Schmelzvorgang, einen im wesentlichen horizontalen Boden (6) und einen Ausgang in Form eines am Grund der Schmelze befindlichen Durchlasses (11) für den Abfluß des hergestellten Glases und dessen Übergang in ein vorderes Abteil (15) umfaßt, **dadurch gekennzeichnet, daß** der Durchlaß (11) wenigstens im oberen Teil von einer beweglichen Absperrung (16) begrenzt wird, welche einen oberen Teil (18, 25, 26, 27a, 27b), der sich nach oben bis zu einer Höhe erstreckt, die größer als die der aufschwimmenden Zusammensetzung (9) ist, und einen unteren Teil (17) aufweist, der sich vollständig im geschmolzenen Glas (10) befindet und Seiten (20, 21) aus einem Metall oder einer Metallegierung besitzt, das/die gegenüber Korrosion durch das geschmolzene Glas beständig ist.

2. Schmelzofen nach Anspruch 1, **dadurch gekennzeichnet, daß** die bewegliche Absperrung (16) in der Höhe (h) regelbar ist.

3. Schmelzofen nach Anspruch 1 oder 2, **dadurch gekennzeichnet, daß** der untere Teil (17) der Absperrung (16) Seiten (20, 21) aus einem Metall besitzt, das aus Molybdän, Wolfram, Platinrhodium oder anderen Legierungen dieser Metalle ausgewählt ist.

4. Schmelzofen nach Anspruch 3, **dadurch gekennzeichnet, daß** der untere Teil (17) der Absperrung im wesentlichen aus Molybdänkomponenten gebildet ist.

5. Schmelzofen nach Anspruch 4, **dadurch gekennzeichnet, daß** der untere Teil (17) im wesentlichen aus mindestens einer Molybdänplatte gebildet ist.

6. Schmelzofen nach Anspruch 5, **dadurch gekennzeichnet, daß** der untere Teil (17) der Absperrung im wesentlichen aus mindestens zwei Molybdänplatten (20, 21) gebildet ist, die sich teilweise seitlich bedecken.

7. Schmelzofen nach einem der Ansprüche 1 bis 6, **dadurch gekennzeichnet, daß** der obere Teil (18, 25, 26, 27a, 27b) der Absperrung aus einem feuerfesten Material besteht.

8. Schmelzofen nach einem der Ansprüche 1 bis 6, **dadurch gekennzeichnet, daß** der obere Teil der Absperrung aus mindestens einer Kühlkomponente gebildet ist.

9. Schmelzofen nach Anspruch 8, **dadurch gekennzeichnet, daß** der obere Teil (18, 25, 26, 27a, 27b) der Absperrung aus Kühlrohren gebildet ist.

10. Schmelzofen nach Anspruch 9, **dadurch gekennzeichnet, daß** der obere Teil (18, 25, 26, 27a, 27b) der Absperrung aus mindestens zwei übereinanderliegenden parallelen U-förmigen Kühlrohren (25, 26, 27a, 27b) zusammengesetzt ist, deren horizontale Basen den mittleren oberendm Teil der Absperrung bilden.

11. Schmelzofen nach einem der Ansprüche 8 bis 10, **dadurch gekennzeichnet, daß** die Kühlkomponenten aus Stahl bestehen.

12. Schmelzofen nach Anspruch 11, **dadurch gekennzeichnet, daß** die Kühlkomponenten von Metallplatten oder einer Beschichtung, die aus einem glasbildenden Anstrich oder einem Email ausgewählt ist, geschützt werden.

13. Schmelzofen nach einem der Ansprüche 5 bis 12, **dadurch gekennzeichnet, daß** die seitlichen Enden der Absperrung wenigstens in deren unterem Teil aus zwei Zylindern (23, 24) bestehen, in welchen die Metallplatte/n teilweise eingelassen ist/sind.

14. Schmelzofen nach Anspruch 13, **dadurch gekennzeichnet, daß** auf den Zylindern, welche die seitlichen Enden des unteren Teils der Absperrung bilden, Zylinder (28, 29) angebracht sind, welche die seitlichen Enden des oberen Teils der Absperrung bilden.

15. Schmelzofen nach Anspruch 14, **dadurch gekennzeichnet, daß** die Zylinder (23, 24, 28, 29) wenigstens in ihrem oberen Teil innen gekühlt werden.

16. Schmelzofen nach Anspruch 14 oder 15, **dadurch gekennzeichnet, daß** die Zylinder (23, 24, 28, 29) mit zwei unabhängigen Kühlkreisen ausgestattet sind.

17. Schmelzofen nach einem der Ansprüche 1 bis 16, **dadurch gekennzeichnet, daß** der untere Teil des Durchlasses (11) von einer Stufe (12) abgeschlossen wird, die sich auf einer Höhe oberhalb der des Bodens (6) des Schmelzofens befindet.

18. Schmelzofen nach einem der Ansprüche 1 bis 17, **dadurch gekennzeichnet, daß** er zwei aufeinanderfolgende Absperrpositionen aufweist.
